(19) Europäisches Patentamt
European Patent Office
Office européen des brevets

(11) **EP 2 994 677 B1**

(12) **EUROPEAN PATENT SPECIFICATION**

(45) Date of publication and mention
of the grant of the patent:
**10.07.2019 Bulletin 2019/28**

(21) Application number: **14803830.0**

(22) Date of filing: **06.05.2014**

(51) Int Cl.:
***F16K 37/00*** *(2006.01)*

(86) International application number:
**PCT/IN2014/000302**

(87) International publication number:
**WO 2014/192018 (04.12.2014 Gazette 2014/49)**

(54) **A SYSTEM FOR MEASURING VALVE STEM DISPLACEMENT**

SYSTEM ZUR MESSUNG DER VENTILSCHAFTVERSCHIEBUNG

SYSTÈME POUR MESURER UN DÉPLACEMENT DE TIGE DE SOUPAPE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.05.2013 IN 1671MU2013**

(43) Date of publication of application:
**16.03.2016 Bulletin 2016/11**

(73) Proprietor: **Forbes Marshall Pvt. Ltd
Maharashtra (IN)**

(72) Inventors:
• **FERNANDES, Neville, C
Pune 411001
Maharashtra (IN)**
• **PRASAD, Jaykumar
Chinchwad
Pune 41103 (IN)**
• **KULKARNI Chetan Ajit
Pune 411052
Maharashtra (IN)**

(74) Representative: **London IP Ltd
100 High street
Milford on Sea
Lymington, Hampshire SO41 0QE (GB)**

(56) References cited:
**US-A- 5 144 977        US-A1- 2002 125 884
US-A1- 2009 309 580        US-A1- 2011 050 373**

EP 2 994 677 B1

## Description

### FIELD

The present disclosure relates to the field of displacement measurement and position sensing, particularly, a system for measuring valve-stem displacement.

### BACKGROUND

Applications such as control instrumentation, process control in industrial products and applications in automotive grade items require position sensing and displacement measurement for different needs. Generally, position sensors are used for setting the percentage opening or closing of valves, facilitating calibration of valves and checking health of valves. The valves are actuated by a control signal from a controller. More specifically, an actuator receives control signal from the controller and actuates a valve stem which in turn causes relative movement between a valve plug and a valve seat of a valve assembly to define the open and closed condition of the valve. As per industry standards, current in range from 4 mA to 20 mA is used in a two wired technique for setting various conditions of the valve assembly, particularly, a 4 mA current from controller defines closed condition of the valve assembly in which the valve stem is so positioned that the valve plug and valve seat are in contact and the valve assembly does not allows any flow therethrough (i.e. zero per cent flow through the valve) and a 20 mA current from controller defines open condition of the valve assembly in which the valve stem is moved up away from the valve seat, i.e. is positioned so as to permit 100 per cent flow through the valve assembly. In order to set the valve condition and to set the position of the valve corresponding to the input signal from the controller, the position of the valve stem is required to be measured. Further, in order to set a pre-determined valve stem position corresponding to a pre-determined current or control signal value and for checking whether the position of the valve stem is corresponding to the pre-determined current or control signal valve, the position of the valve stem is required to be measured. Still further, for monitoring the health of the valve, the position of the valve stem is required to be measured. Generally, the position of the valve stem is measured by using various known position sensing and displacement measurement systems. Further, position sensing and displacement measurement systems utilize Hall effect sensors to determine the position of a magnet in 3-dimensional space which in turn facilitates position sensing and displacement measurement. There are other sensing methods and measurement systems utilizing sensing elements other than Hall effect sensors such as infrared and ultrasonic sensors and linear variable differential transformer (LVDT) that are used for position sensing and displacement measurement. However, such systems for position sensing and displacement measurement are complex. Other sensors such as eddy current and capacitive based techniques are used for position sensing and measuring displacement, however, are applicable only for short distance. Further, such systems for position sensing and displacement measurement have drawbacks associated there-with.

For example US Patent Number 4622644 (hereinafter referred to as the '644 US Patent) discloses a system for magnetic position and orientation measurement which enables measurement of the position and orientation of a permanent magnet in five degrees of freedom within a three dimensional region. In order to sense the position and orientation of the permanent magnet, three antennas, particularly, three-axis antennas are created with each antenna being composed of three mutually orthogonal Hall effect devices. As is known, Hall effect devices produce an output voltage proportional to the product of the input current, the magnet flux density and the sine of the angle between the magnet flux density and the plane of the Hall effect device. The output voltages from the nine Hall effect devices utilized in the system are fed as inputs to a microprocessor device which estimates the position and orientation of the magnet utilizing a non-linearized algorithm. Subsequently, the microprocessor uses a linearized algorithm to calculate the position and orientation of the permanent magnet. The system for magnetic position and orientation measurement of the '644 US Patent requires several sensors and consumes more power particularly, because all sensors are required to be always in powered "ON" configuration in order to achieve the end effect.

The US Patent Number 6073043 (hereinafter referred to as the '043 US Patent) discloses a method and apparatus for determining the position and orientation of a remote object relative to a reference coordinate frame that includes a plurality of field-generating elements for generating electromagnetic fields, a drive for applying to the generating elements, signals that generate a plurality of electromagnetic fields that are distinguishable from one another, a remote sensor having one or more field-sensing elements for sensing the fields generated and a processor for processing outputs of the sensing element(s) into remote object position and orientation relative to the generating element reference coordinate frame. The position and orientation solution is based on the exact formulation of the magnetic field coupling as opposed to approximations used elsewhere. The system can be used for locating the end of a catheter or endoscope, digitizing objects for computer databases, virtual reality and motion tracking. The methods presented here can also be applied to other magnetic tracking technologies as a final "polishing" stage to improve the accuracy. The method and apparatus for determining the position and orientation of a remote object as disclosed in the '043 US Granted Patent utilizes coils for magnetic field generation rather than permanent magnet and is expensive, complex and involves high power consumption.

Patent document US 5,144,977 discloses a valve stem displacement measuring system according to the preamble of claim 1.

Accordingly there is a need for a system for position sensing and displacement measurement that achieves accurate position sensing and displacement measurement with a relatively lesser number of Hall effect sensors and is accordingly inexpensive, simple in construction and requires less maintenance. Further, there is a need for a system for position sensing and displacement measurement that has a relatively compact construction than conventionally known systems. Further, there is a need for a system for position sensing and displacement measurement that utilizes ratio metric measurement and that consumes less energy. Further, there is a need for a system for position sensing and displacement measurement that involves lesser number of parts and is simple in construction. Furthermore, there is a need for a system for position sensing and displacement measurement that is simple to use, reliable and sturdy in construction. Still further, there is a need for a system for position sensing and displacement measurement that can be used in a wide variety of applications.

## OBJECTS

Some of the objects of the present disclosure which at least one embodiment satisfies, are described herein below:

It is an object of the present disclosure to ameliorate one or more problems of the prior art or to at least provide a useful alternative.

An object of the present disclosure is to provide a system for position sensing and displacement measurement for setting the percentage opening or closing of a valve.

Another object of the present disclosure is to provide a system for position sensing and displacement measurement for facilitating accurate calibration of a valve corresponding to input signals received from a controller.

Yet another object of the present disclosure is to provide a system for position sensing and displacement measurement that facilitates accurate checking of the health of the valve.

Still another object of the present disclosure is to provide a system for position sensing and displacement measurement, particularly a system for measuring valve stem displacement that has compact construction.

Another object of the present disclosure is to provide a system for measuring valve stem displacement that accurately determines position and displacement of a valve stem of a valve.

Still another object of the present disclosure is to provide a system for measuring valve stem displacement that requires relatively lesser number of Hall effect sensors and is accordingly inexpensive, simple in construction and requires less maintenance.

Still another object of the present disclosure is to provide a system for measuring valve stem displacement that is simple to use, reliable and sturdy in construction.

Another object of the present disclosure is to provide a system for position sensing and displacement measurement that can be used in a wide variety of applications.

Still another object of the present disclosure is to provide a system for position sensing and displacement measurement that utilizes appropriate number of Hall effect sensors for improving signal strength and linearity.

Another object of the present disclosure is to provide a system for measuring valve stem displacement in which only one sensor is active at a given time, thereby substantially reducing power consumption by the system for measuring valve stem displacement.

Yet another object of the present disclosure is to provide a user-friendly system for measuring valve stem displacement that may be retrofitted to a conventional valve with minimum modifications.

## SUMMARY

A valve stem displacement measuring system is disclosed in accordance with an embodiment of the present disclosure. The valve stem displacement measuring system comprises a valve stem. The system further comprises a housing of a valve assembly, a magnet and at least one pair of sensors. The housing of the valve assembly is adapted to slidably receive the valve stem. The valve stem slides along the wall of the housing. The magnet is mounted on the valve stem and moves between two pre-determined positions defined along an axis of motion of the valve stem within the housing in response to displacement of the valve stem for facilitating change in magnetic flux associated with the magnet. The at least one pair of sensors are mounted in the housing, wherein each of the sensors is disposed on either side of the axis for determining displacement of the magnet based on change in the magnetic flux caused by motion of the magnet. Each of the sensors utilizes a flux concentrator which is configured to receive and direct the magnetic flux of the magnet to the sensors.

Typically, the sensors are Hall effect sensors.

Generally, the sensors are used for determining travel distance of the magnet up-to 100 mm.

Preferably, the sensors are disposed at a distance in the range of 40 to 60 mm from the axis and at an inclination of 45 degree with respect to the axis.

Typically, the sensors are Anisotropic Magneto Resistance (AMR) sensors.

Alternatively, the sensors are Giant Magneto Resistance (GMR) sensors.

**BRIEF DESCRIPTION OF THE ACCOMPANYING DRAWINGS:**

The objects and features of a system for measuring valve stem displacement of the present disclosure will be more clearly understood from the following description of the disclosure taken in conjunction with the accompanying drawings, in which,

Figure 1 illustrates a schematic representation of an arrangement of a magnet with respect to at least one pair of sensors used in a system for measuring valve displacement in accordance with an embodiment of the present disclosure, wherein the magnet travels between two pre-determined positions defined along an axis of motion of the valve stem;

**Figure 2a** illustrates a top view of housing receiving a valve stem having magnet mounted thereon and Hall effect sensors securely mounted in internal walls of the housing;

**Figure 2b** illustrates a front view of the housing of Figure 2a, wherein the magnet is illustrated in different positions E1, E2, and I with respect to the Hall effect sensors as the position of the valve stem changes within the housing;

**Figure 3** illustrates a graphical representation depicting the variation of voltage ratio determined from voltage readings of the sensors with respect to position of the magnet; and

**Figure 4** illustrates another graphical representation depicting the variation of input mili-ampere command with respect to output valve opening position in per cent.

**DETAILED DESCRIPTION**

The system of the present disclosure will now be described with reference to the embodiments which do not limit the scope and ambit of the disclosure. The description provided is purely by way of example and illustration.

The embodiments herein and the various features and advantageous details thereof are explained with reference to the non-limiting embodiments in the following description. Descriptions of well-known components and processing techniques are omitted so as to not unnecessarily obscure the embodiments herein. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.

The present disclosure envisages a system for position sensing and displacement measurement, particularly a system for measuring displacement of a valve, particularly, displacement of a valve stem of the valve, wherein the valve may be any type of valve. The system for valve stem displacement measurement utilizes non-contact magnetic field sensors and a miniature magnet. More specifically, the system for measuring valve displacement is an electropneumatic valve positioner having at least two sensors, a flux concentrator and a permanent magnet or optionally a potentiometer sensor for sensing the position of the valve in a single housing. The system for position sensing and displacement measurement in accordance with the present disclosure accurately determines the position of a valve stem of a valve which is thereafter used for facilitating accurate calibration of a valve assembly corresponding to control signals received by an actuator from a controller. The valve stem position determined by the system for position sensing and displacement measurement of the present disclosure is further utilized to determine if the valve has physically moved corresponding to the control signals received by the actuator from the controller, i.e. facilitates accurate checking of the health of the valve assembly.

The system for position sensing and displacement measurement, particularly the system for measuring valve displacement in accordance with the present disclosure can be used for position sensing along uni-directional axis of motion. In case of the system for measuring valve displacement, a permanent magnet is mounted on the device whose position is to be sensed, particularly, the permanent magnet is mounted on the valve stem and at least one pair of sensors, particularly, Hall or magneto-resistive sensors are maintained stationary and are disposed near the permanent magnet. The movement of magnet produces a change in the magnetic field which is sensed by the Hall / magneto-resistive sensors. The change in the magnetic field is interpreted by a microcontroller based processing circuit and a linearizing algorithm which displays the output in the form of distance. The geometry and the orientation of the Hall effect sensors relative to the movement of the magnet are important because it is the geometry which can give a linearity of 0.5% of the total magnet displacement or travel. Accordingly, in case of the system for position sensing and displacement measurement of the present disclosure, the Hall effect sensors are strategically placed with respect to the path of travel of the magnet for effective and accurate measurement of the movement of the magnet. The key elements of the system for measuring valve stem displacement are a pair of Hall effect sensors, a flux concentrator, a permanent magnet, a processing circuit and a linearizing algorithm.

Generally, the elements of the system for position sensing and displacement measurement of the present disclosure are disposed inside housing "H", wherein the housing "H" is mounted between a valve actuator and a valve assembly, particularly, valve plug-valve seat assembly, wherein the valve actuator receives actuating signals from the controller/ control system and actuates movement of the valve plug relative to the valve seat via the valve stem, i.e. the valve actuator actuates movement of the valve stem, thereby causing relative movement between the valve plug and valve seat for defining open and closed condition of the valve assembly. The controller/ control system that is providing actuation signal to the valve actuator is different from the pneumatic control system that provide pneumatic control signal used for supplying pneumatic fluid for opening and closing of the valve, and therefore the system for position sensing and displacement measurement of the present disclosure require additional power source for providing operating power to the controller/ control system. The valve stem passes through the housing "H" and a magnet is mounted on the valve stem, such that the movement of the valve stem causes movement of the magnet that is detected by a pair of Hall effect sensors disposed on the housing and on either side of the valve stem to ultimately detect position of the valve stem. In accordance with an embodiment, the position of the valve stem detected by the system for position sensing and displacement measurement of the present disclosure is utilized to provide feedback to a maintenance system regarding proper operation of the valve stem.

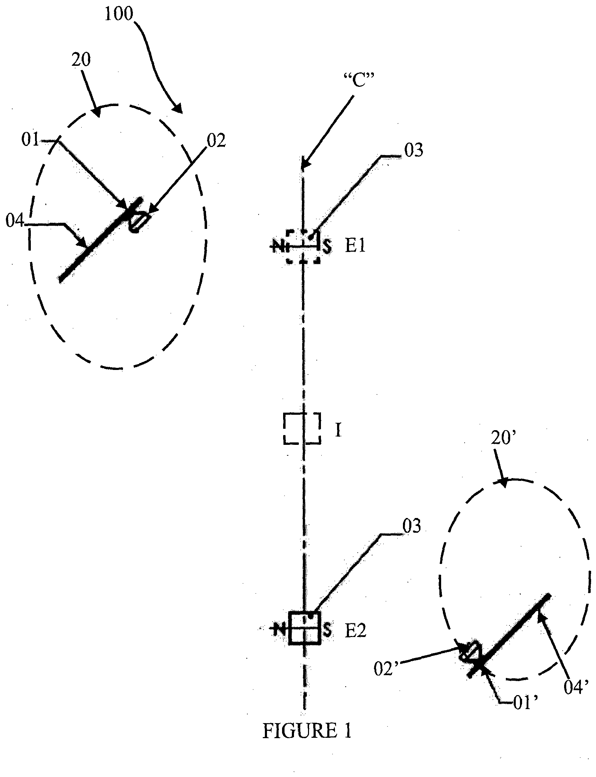

**Figure 1** illustrates an arrangement of a magnet **03** with respect to both sensors, particularly, Hall effect sensors **20** and **20**' of a system **100** for measuring valve displacement in accordance with an embodiment of the present disclosure.

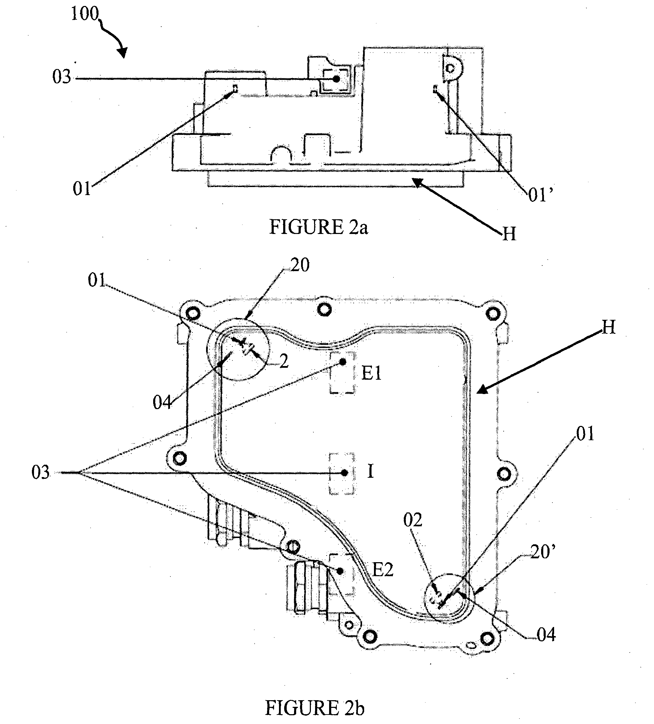

**Figure 2a** illustrates a top view of housing "H" along with the different elements of the system for position sensing and displacement measurement 100, example, the magnet **03** mounted on the a valve stem displaceable with the housing "H" and Hall effect sensors **20** and **20**' accommodated within the housing "H". **Figure 2b** illustrates a front view of the housing of Figure 2a, wherein the magnet **03** is illustrated in different positions E1, E2, and I with respect to the Hall effect sensors 20 and 20' as the position of the valve stem changes within the housing "H". More specifically, the magnet **03** is illustrated at extreme positions when the valve stem is at extreme positions defining fully open and closed condition of the valve as well as at intermediate position I, when valve stem is at an intermediate position I between the extreme positions thereof.

The Hall effect sensors **20** and **20**' of a system **100** are disposed on the housing "H", particularly, the Hall effect sensors **20** and **20**' are securely mounted on the inner walls of the housing and are disposed diagonally opposite to each other as illustrated in **Figure 2b** and are on either side of the valve stem. Each of the Hall effect sensors **20** and **20**' includes a Hall effect sensor chip **01** and **01**'. Each Hall effect sensor chip **01** and **01**' is connected to a corresponding flux concentrator **02** and **02**' respectively that concentrates the magnetic flux on the corresponding Hall effect sensor chip **01** and **01**'. Further, the Hall effect sensor chip **01** and the flux concentrator **02** assembly is mounted on a corresponding Hall Printed Circuit Board (PCB) **04**. Similarly, the Hall effect sensor chip **01**' and the flux concentrator **02**' assembly is mounted on the corresponding Hall Printed Circuit Board (PCB) **04**'. The Hall effect sensor chip **01** is mounted with flux concentrator **02** on the Hall Printed Circuit Board (PCB) **04**. The magnet **03** moves between two predetermined positions defined along an axis of motion of the valve, referred to as "C" in **Figure 1** in response to displacement of the valve for facilitating change in magnetic flux associated with the magnet. Both the Hall effect sensors **20** and **20**' are placed at a distance in the range of 40 to 60 mm from the axis, with each Hall effect sensor disposed at the either side of the centre axis "C". Referring to Figure 1, the magnet **03** moves between pre-determined positions E1 and E2, the magnet at position E2 is represented by phantom lines as it is the same magnet at position E1. The Hall effect sensors **20** and **20**' are disposed at 45 degree with respect to the axis "C" as illustrated in **Figure 1.** More specifically, the Hall effect sensors **20** and **20**' are positioned non-orthogonal to the axis of motion of the magnet. The magnet **03** is so disposed that the poles of the magnet **03** are aligned in one direction. The magnet **03** moves up-down only along the axis "C". The space required for magnet travel is 110 mm along the axis "C". As the magnet **03** mounted over the valve stem moves along the centre axis "C", the magnetic field associated with the magnet **03** is detected by the Hall effect sensor chip **01**. The flux concentrator **02** receives the magnetic flux from the magnet **03,** concentrates the magnetic flux and directs the magnetic flux to the Hall effect sensor chip **01** for enabling the Hall effect sensor chip **01** to accurately detect the position of the magnet. Such a configuration of the system for position sensing and displacement measurement accurately determines the position of the valve stem of the valve which is thereafter used for facilitating accurate calibration of the valve assembly corresponding to control signals received from a controller. Further, the valve stem position determined by the system for position sensing and displacement measurement of present disclosure is further utilized for checking the health of the valve assembly, i.e. to determine if the position of the valve stem matches with the actual requirement in accordance with the control signal from the controller.

Although, the system for position sensing and displacement measurement **100** of the present disclosure has been explained using Hall effect sensors **20** and **20'**, however, the system for position sensing and displacement measurement **100** operates effectively even with Anisotropic Magneto Resistance (AMR) sensors or Giant Magneto Resistance (GMR) sensors are used instead of the Hall effect sensors **20** and **20'**.

Such a configuration and positioning of the sensors **20** and **20'** and the magnet **03** impart a compact configuration to the system for measuring valve stem displacement. Further, such a configuration of the system **100** for measuring valve displacement reduces the overall space requirement for magnet travel and accordingly facilitates achieving a relatively miniature construction and the system can be disposed within a single housing. The magnet **03**, the Hall effect sensors **20** and **20'** of the system **100** for measuring valve stem displacement are accommodated inside a single housing "H". More specifically, the housing "H", referred to as the valve positioner housing has provision to fit both the Hall effect sensors **20** and **20'** as well as an optional potentiometer sensor therein, wherein the housing is explosion proof. With such a configuration of the system **100** for measuring valve displacement, the Hall sensing technique is used in case the travel of the magnet **03** is up-to 100 mm.

As the magnet **03** moves up-down along the axis "C" between the extreme positions E1 and E2, the Hall effect sensors **20** generate a voltage which is proportional to the normal component of the incident flux and the excitation current. More specifically, the voltage generated Vs1 and Vs2 at the Hall effect sensors **20** and **20'** respectively can be determined by using the following equations.

$$Vs1 = K \cdot P(X1, Y1, Z1) \cdot B(T, t) \text{ ----------(1)}$$

$$Vs2 = K \cdot P(X2, Y2, Z2) \cdot B(T, t) \text{ -----------(2)}$$

Where Vs1 is the Output voltage of sensor 20;
Vs2 is the Output voltage of sensor 20';
K is a constant;
B is Magnetic field;
T is Temperature;
t is Time;
P - Position, i.e. the x, y, z co-ordinates of the magnet 03;
The voltage generated at the Hall effect sensors **20** and **20'** is used for determining the voltage ratio (R) based on the following equation.

$$R = (Vs1 - Vs2) / (Vs1 + Vs2) \text{----------(3)}$$

By using the Output voltages (Vs1) and (Vs2) determined from the above equations, particularly, equation (1) and (2) and using in equation (3), the voltage ratio (R) can be determined as under:

$$R = (P(X1, Y1, Z1) - P(X2, Y2, Z2)) / (P(X1, Y1, Z1) + P(X2, Y2, Z2)) \text{ ----(4)}$$

Accordingly, the voltage ratio depends only upon the position of the magnet 03 along the 3-axis(X, Y, Z). The value of the voltage ratio is in the range of -1 to 1, i.e. the maximum value of the voltage ratio is +1 and the minimum value of the voltage ratio is -1.

TEST DATA

Tests were conducted to determining Vs1, Vs2 and voltage ratio readings corresponding to different displacement values in (mm).

Following table is test data conducted for determining Vs1, Vs2 and voltage ratio readings corresponding to displacement values in (mm) and are arranged in tabulated form for depicting variation of voltage ratio with respect to position of the magnet. The following test data is corresponding to situation, wherein the north side of the magnet is facing sensor 20 and the south side of the magnet is facing sensor 20'.

| Displacement Value(mm) | Vs1 | Vs2 | Ratio |
|---|---|---|---|
| 0 | 0.959337 | 1.499751 | 0.714006 |
| 1 | 0.970433 | 1.499512 | 0.713404 |
| 2 | 0.978945 | 1.499621 | 0.710411 |
| 3 | 0.986328 | 1.499795 | 0.707089 |
| 4 | 0.994189 | 1.49999 | 0.703417 |
| 5 | 1.00333 | 1.500316 | 0.698252 |
| 6 | 1.012885 | 1.500424 | 0.694743 |
| 7 | 1.023221 | 1.500576 | 0.690564 |
| 8 | 1.034903 | 1.500663 | 0.686441 |
| 9 | 1.046346 | 1.50114 | 0.678937 |
| 10 | 1.057095 | 1.501531 | 0.672266 |
| 11 | 1.069212 | 1.501444 | 0.669028 |
| 12 | 1.082501 | 1.501791 | 0.661538 |
| 13 | 1.0949 | 1.502117 | 0.65433 |
| 14 | 1.107819 | 1.502117 | 0.649464 |
| 15 | 1.120522 | 1.502768 | 0.638914 |
| 16 | 1.13303 | 1.503115 | 0.630758 |
| 17 | 1.146384 | 1.503333 | 0.623031 |
| 18 | 1.158891 | 1.503701 | 0.614084 |
| 19 | 1.171334 | 1.504092 | 0.604654 |
| 20 | 1.183993 | 1.504743 | 0.592577 |
| 21 | 1.19561 | 1.505069 | 0.583399 |
| 22 | 1.207445 | 1.505546 | 0.572451 |
| 23 | 1.219561 | 1.506393 | 0.557877 |
| 24 | 1.230766 | 1.507153 | 0.544191 |
| 25 | 1.241558 | 1.507717 | 0.531924 |
| 26 | 1.252176 | 1.508498 | 0.517608 |
| 27 | 1.262816 | 1.509432 | 0.501618 |
| 28 | 1.273239 | 1.510148 | 0.486963 |
| 29 | 1.282489 | 1.511255 | 0.469913 |
| 30 | 1.292152 | 1.512188 | 0.453285 |
| 31 | 1.300751 | 1.5131 | 0.437398 |
| 32 | 1.310088 | 1.514532 | 0.416427 |
| 33 | 1.318057 | 1.515574 | 0.399331 |
| 34 | 1.326156 | 1.516855 | 0.379912 |
| 35 | 1.333279 | 1.517983 | 0.362354 |
| 36 | 1.341031 | 1.519546 | 0.340516 |
| 37 | 1.347827 | 1.521109 | 0.319691 |

(continued)

| Displacement Value(mm) | Vs1 | Vs2 | Ratio |
|---|---|---|---|
| 38 | 1.354385 | 1.52278 | 0.298173 |
| 39 | 1.361312 | 1.524538 | 0.274993 |
| 40 | 1.367283 | 1.52584 | 0.255744 |
| 41 | 1.372885 | 1.527881 | 0.232578 |
| 42 | 1.378336 | 1.530029 | 0.20884 |
| 43 | 1.384264 | 1.531983 | 0.184595 |
| 44 | 1.389063 | 1.534457 | 0.160024 |
| 45 | 1.393927 | 1.536411 | 0.137534 |
| 46 | 1.398465 | 1.538972 | 0.112674 |
| 47 | 1.404805 | 1.542466 | 0.077788 |
| 48 | 1.408041 | 1.54481 | 0.057303 |
| 49 | 1.411863 | 1.547697 | 0.032466 |
| 50 | 1.415597 | 1.551018 | 0.006071 |
| 51 | 1.419354 | 1.553948 | -0.01913 |
| 52 | 1.422481 | 1.557464 | -0.04415 |
| 53 | 1.425651 | 1.560981 | -0.06938 |
| 54 | 1.4288 | 1.564844 | -0.09573 |
| 55 | 1.431753 | 1.568512 | -0.12067 |
| 56 | 1.434315 | 1.572614 | -0.14505 |
| 57 | 1.437181 | 1.577172 | -0.1722 |
| 58 | 1.439678 | 1.581513 | -0.19685 |
| 59 | 1.442197 | 1.586527 | -0.22326 |
| 60.5 | 1.445237 | 1.593907 | -0.25801 |
| 61 | 1.446323 | 1.596446 | -0.27016 |
| 63 | 1.450449 | 1.607798 | -0.3195 |
| 64 | 1.452164 | 1.613919 | -0.34237 |
| 65 | 1.453814 | 1.620235 | -0.36485 |
| 66 | 1.455508 | 1.626855 | -0.38792 |
| 67 | 1.457028 | 1.633084 | -0.4089 |
| 68 | 1.458613 | 1.640963 | -0.4325 |
| 69 | 1.459981 | 1.648126 | -0.4531 |
| 70 | 1.461089 | 1.655549 | -0.47152 |
| 71.5 | 1.463021 | 1.666835 | -0.50133 |
| 72 | 1.463673 | 1.672131 | -0.5128 |
| 73 | 1.464802 | 1.680097 | -0.5313 |
| 74 | 1.465801 | 1.689148 | -0.54929 |
| 75 | 1.466648 | 1.698437 | -0.56563 |
| 76 | 1.467929 | 1.707966 | -0.5865 |

(continued)

| Displacement Value(mm) | Vs1 | Vs2 | Ratio |
|---|---|---|---|
| 77 | 1.468841 | 1.717733 | -0.60346 |
| 78 | 1.469275 | 1.727392 | -0.61473 |
| 79 | 1.470035 | 1.737528 | -0.6297 |
| 80.2 | 1.470643 | 1.740067 | -0.63834 |
| 81.05 | 1.471012 | 1.748901 | -0.64776 |
| 82 | 1.471707 | 1.758603 | -0.6614 |
| 83.3 | 1.472597 | 1.773102 | -0.67974 |
| 84 | 1.473032 | 1.780438 | -0.68872 |
| 85 | 1.473705 | 1.792159 | -0.7027 |
| 86.2 | 1.474877 | 1.816338 | -0.72827 |
| 87 | 1.474942 | 1.825606 | -0.73242 |
| 88.2 | 1.475898 | 1.838043 | -0.75054 |
| 89 | 1.476093 | 1.84692 | -0.75621 |
| 90.1 | 1.47681 | 1.860464 | -0.77134 |
| 91.4 | 1.477114 | 1.873552 | -0.77972 |
| 93 | 1.477744 | 1.889896 | -0.79428 |
| 95 | 1.478634 | 1.900531 | -0.81278 |
| 96.4 | 1.478894 | 1.912078 | -0.82012 |
| 97 | 1.478894 | 1.916571 | -0.82098 |
| 98 | 1.479264 | 1.923886 | -0.8297 |
| 99.2 | 1.479654 | 1.931547 | -0.83925 |
| 100 | 1.479893 | 1.936344 | -0.84531 |
| 101 | 1.480219 | 1.940316 | -0.85346 |
| 102 | 1.480523 | 1.943398 | -0.86139 |
| 103 | 1.480697 | 1.945786 | -0.86621 |
| 104 | 1.481066 | 1.946003 | -0.87644 |
| 105.7 | 1.481022 | 1.946524 | -0.87525 |
| 107 | 1.481348 | 1.945677 | -0.88494 |
| 108 | 1.481739 | 1.943246 | -0.89793 |
| 109 | 1.482173 | 1.94227 | -0.91545 |

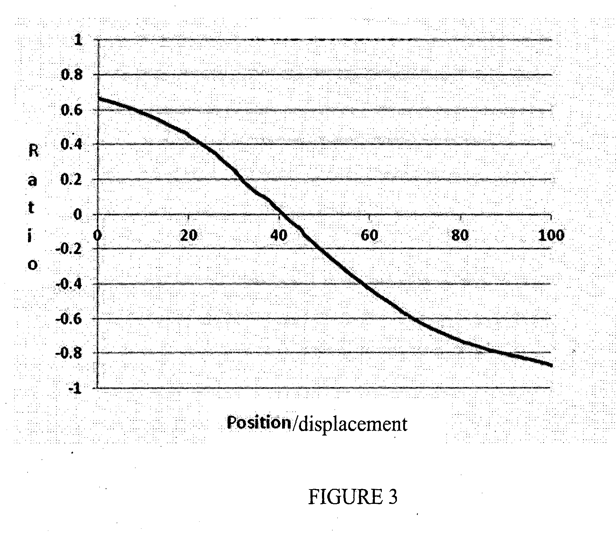

**Figure 3** illustrates a graphical representation depicting the variation of voltage ratio determined from voltage readings of the Hall effect sensors with respect to position of the magnet as were tabulated in the above table. By determining the voltage ratio (R) by using the equation (3), the position of the magnet may be determined by using the equation (4).

The processing circuit includes a differential amplifier with some gain, an Analog to Digital Converter (ADC) and a microcontroller for ensuring that the excitation voltage remains constant. The processing circuit also measures the voltage output of the Hall effect sensors **20** and **20'**, wherein the output obtained is purely a function of the flux sensed in the magnetic circuit. A small step change of even 50 micro-meters in the position of the magnet **03** changes the field sensed by the two Hall effect sensors **20** and **20'**, thereby enhancing the accuracy of the system **100** for measuring valve stem displacement. The resultant field change is sensed and mathematically processed by a microcontroller based processing circuit. A ratio of the two outputs is taken which ensures that any common mode effects are nullified. Such configuration also ensures that the final computed output is independent of any changes in temperature, interference and the drive voltage. A converter converts the ratio to distance and linearizes the feedback signal and performs calibrations. The linearization is achieved by reading the output from both the Hall effect sensors **20** and **20'**, taking a ratio and passing it through a proprietary algorithm to calculate the distance. The linearized distance is displayed in millimetre (mm) or centimetre (cm) for the user to determine the change in displacement of the magnet **03**. All operations for determining the change in the displacement of the magnet **03** are achieved with a miniscule drive current of less than 1mA. Accordingly, the overall current consumption of the circuit is kept at a minimum as against other existing systems for position sensing and displacement measurement.

In accordance with an embodiment, the system **100** for measuring valve stem displacement utilizes a microcontroller based smart positioner in combination with a drive and forms a regulation system. The current position of the drive is detected using a pair of Hall effect sensors which is sent back as actual value. The actual and target values measured by the Hall effect sensors are simultaneously displayed on a digital display. The target values generate a current that is applied to the positioner, which in two-wire mode is also used to power the positioner. These positioning signals(current) cause pressure changes in the drive chamber(s) and thus a repositioning of the drive until the regulation deviation returns to zero.

The smart positioner of the system **100** for measuring valve stem displacement further utilizes control logic/algorithm for minimizing error in measurement. In operation, the smart positioner of the system **100** for measuring valve stem displacement forms a control loop with a pneumatic drive. The set value/ desired travel of the magnet is displayed as "Dtrvl" in "%" that represents the expected travel of the valve stem of the valve. The "trvl" is displayed in "%" that represents the actual position of the stem as measured by the positioner. Any movement of the drive spindle causes the magnet mounted on the stem to move. The movement of the magnet changes the magnetic flux sensed by a pair of Hall effect sensors mounted inside the housing. An algorithm converts and interprets this flux change to change in position and feeds it to the control algorithm. The difference between "Dtrvl" and "trvl" is interpreted as an error which is reduced by an adaptive control algorithm. The control algorithm is a 3 way acting control which tries to reduce the error to a smallest possible value in the least time. For large errors the proportional component is higher and integral component is lower. For smaller errors, the integral component is higher which controls the air in a pulsed format ensuring that the "trvl" does not overshoot the "Dtrvl". The error correction in this case is slower as compared to proportional action. Such a control logic/algorithm utilizes calibration parameters and facilitates minimizing error in measurement. All calibration parameters are saved and retained in a non-volatile flash memory of the positioner so that the calibrated values are retained even after a power failure and/or reset.

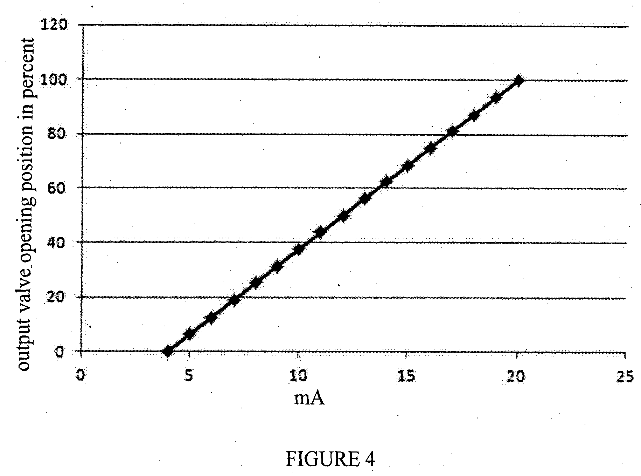

**Figure 4** illustrates another graphical representation depicting the variation of input mili-ampere command with respect to output valve opening position in per cent. The following table shows experimental results in tabulated form for depicting variation of input mili-ampere command with respect to output valve opening position in per cent.

| Input mili-Ampere command | output valve opening positioning in percentage( %) |
|---|---|
| 4 | 0 |
| 5 | 6.25 |
| 6 | 12.5 |
| 7 | 18.75 |
| 8 | 25 |
| 9 | 31.25 |
| 10 | 37.5 |
| 11 | 43.75 |
| 12 | 50 |
| 13 | 56.25 |
| 14 | 62.5 |
| 15 | 68.75 |
| 16 | 75 |
| 17 | 81.25 |

(continued)

| Input mili-Ampere command | output valve opening positioning in percentage( %) |
|---|---|
| 18 | 87.5 |
| 19 | 93.75 |
| 20 | 100 |

From **Figure 4** and above table it is clear that the till input command in form of current having value 4 mili-ampere or less, there is no movement of the valve, i.e. there is no valve opening and the valve remains closed. At input current value of 4 mA or less from the controller, the valve assembly defines closed condition thereof in which the valve stem is so positioned that the valve and valve seat are in contact and the valve assembly does not allows any flow therethrough (i.e. zero per cent flow through the valve). After 4 mA current as input command from controller, the opening of the valve starts, particularly, per cent opening of the valve varies in direct relation with value of input current from the controller.

The system for position sensing and displacement measurement facilitates accurate checking of the health of the valve by diagnosing the wear of the valve seat, wear of the valve stem seal and recording the number of days of operation of the valve. The system also records the number of times the valve stem has changed its direction for opening and closing of valve. This diagnostics function helps in increasing durability and efficient functioning of the valve through preventive maintenance.

## TECHNICAL ADVANCEMENTS

A system for position sensing and displacement measurement, particularly, a system for measuring valve stem displacement, in accordance with the present disclosure has several technical advantages including but not limited to the realization of:

- a system for position sensing and displacement measurement for facilitating accurate calibration of a valve corresponding to input signals received by the valve from a controller;
- a system for position sensing and displacement measurement that facilitates accurate checking of the health of the valve;
- a system for position sensing and displacement measurement, particularly a system for measuring valve displacement that has compact construction due to strategically positioning and arranging of the sensors;
- a system for measuring valve displacement that accurately determines position and displacement of a valve stem of a valve;
- a system for measuring valve displacement that requires less number of Hall effect sensors and accordingly is inexpensive, simple in construction and requires less maintenance;
- a system for measuring valve displacement that achieves relatively miniature construction of the system for measuring valve stem displacement by reducing space required for magnet travel;
- a system for measuring valve displacement that is simple to use, reliable and sturdy in construction;
- a system for position sensing and displacement measurement that can be used in a wide variety of applications;
- a system for position sensing and displacement measurement that utilizes appropriate number of Hall effect sensors for improving signal strength and linearity;
- a system for measuring valve displacement in which sensors are positioned non-orthogonal to the axis of motion, thereby imparting compact configuration to the system for measuring valve stem displacement;
- a system for measuring valve displacement in which only one sensor is active at a given time, thereby substantially reducing power consumption by the system for measuring valve stem displacement;
- a user-friendly system for measuring valve displacement that may be retrofitted to a conventional valve without requiring many modifications; and
- a system for measuring valve displacement that is efficient and reliable.

Throughout this specification the word "comprise", or variations such as "comprises" or "comprising", will be understood to imply the inclusion of a stated element, integer or step, or group of elements, integers or steps, but not the exclusion of any other element, integer or step, or group of elements, integers or steps.

The use of the expression "at least" or "at least one" suggests the use of one or more elements or ingredients or quantities, as the use may be in the embodiment of the disclosure to achieve one or more of the desired objects or results.

Any discussion of documents, acts, materials, devices, articles or the like that has been included in this specification is solely for the purpose of providing a context for the disclosure. It is not to be taken as an admission that any or all of these matters form a part of the prior art base or were common general knowledge in the field relevant to the disclosure as it existed anywhere before the priority date of this application.

While considerable emphasis has been placed herein on the specific features of the preferred embodiment, it will be appreciated that many additional features can be added and that many changes can be made in the preferred embodiment without departing from the scope of the claims. These and other changes in the preferred embodiment of the disclosure will be apparent to those skilled in the art from the disclosure herein, whereby it is to be distinctly understood that the foregoing descriptive matter is to be interpreted merely as illustrative of the disclosure and not as a limitation.

**Claims**

1. A valve stem displacement measuring system (100) comprising a valve stem, and further comprising:

   • a housing (H) of a valve assembly adapted to slidably receive the valve stem, wherein said valve stem slides along the wall of said housing (H);
   • a magnet (03) mounted on said valve stem and adapted to move between two pre-determined positions defined along an axis (C) of motion of said valve stem within said housing (H) in response to displacement of said valve stem for facilitating change in magnetic flux associated with said magnet (03); and
   at least a pair of sensors (20, 20') mounted in said housing (H), said system (100) **characterized in that**,
   • each of said sensors (20, 20') is disposed on either side of said axis (C) and is configured to determine displacement of said magnet (03) based on change in said magnetic flux caused by motion of said magnet (03), each of said sensors (20, 20') comprising a flux concentrator (02, 02') configured to receive and direct said magnetic flux of said magnet (3) to said sensors (20, 20').

2. The system (100) as claimed in claim 1, wherein said sensors (20, 20') are Hall effect sensors.

3. The system (100) as claimed in claim 1, wherein said sensors (20, 20') are configured to determine a travel distance of said magnet (03) up-to 100 mm.

4. The system (100) as claimed in claim 1, wherein said sensors (20, 20') are disposed at a distance in the range of 40 to 60 mm from said axis (C) and at an inclination of 45 degree with respect to said axis (C).

5. The system (100) as claimed in claim 1, wherein said sensors (20, 20') are Anisotropic Magneto Resistance (AMR) sensors.

6. The system (100) as claimed in claim 1, wherein said sensors (20, 20') are Giant Magneto Resistance (GMR) sensors.

**Patentansprüche**

1. Ventilstangen-Wegmesssystem (100), eine Ventilstange umfassend, und ferner Folgendes umfassend:

   • ein Gehäuse (H) einer Ventilbaugruppe, die für die verschiebbare Aufnahme der Ventilstange angepasst ist, wobei sich die Ventilstange entlang der Wand des Gehäuses (H) verschiebt;
   • ein Magnet (03), der auf der Ventilstange montiert ist und so angepasst ist, dass er sich zwischen zwei vorgegebenen Positionen, die entlang einer Bewegungsachse (C) der Ventilstange innerhalb des Gehäuses (H) definiert sind, als Reaktion auf die Verschiebung der Ventilstange bewegt, wobei eine Veränderung des magnetischen Flusses bewirkt wird, der mit dem Magneten (03) verbunden ist; und
   mindestens ein Paar Sensoren (20, 20'), die im Gehäuse (H) montiert sind,
   wobei das System (100) **dadurch gekennzeichnet ist, dass**
   • jeder der Sensoren (20, 20') jeweils auf einer Seite der Achse (C) angeordnet und so ausgebildet ist, dass die Verschiebung des Magneten (03) anhand der Veränderung des magnetischen Flusses bestimmt wird, die durch die Bewegung des Magneten (03) verursacht wird, wobei jeder der Sensoren (20, 20') Folgendes umfasst: einen magnetischen Flusskonzentrator (02, 02'), der so ausgebildet ist, dass er den magnetischen Fluss des Magneten (3) aufnimmt und zu den Sensoren (20, 20') leitet.

2. System (100) nach Anspruch 1, wobei die Sensoren (20, 20') Halleffektsensoren sind.

3. System (100) nach Anspruch 1, wobei die Sensoren (20, 20') so ausgebildet sind, dass ein Verfahrweg des Magneten (03) von bis zu 100 mm bestimmt wird.

4. System (100) nach Anspruch 1, wobei die Sensoren (20, 20') in einer Entfernung im Bereich von 40 bis 60 mm von der Achse (C) und in einer Neigung von 45 Grad zur Achse (C) angeordnet sind.

5. System (100) nach Anspruch 1, wobei die Sensoren (20, 20') anisotrope magnetoresistive Sensoren (AMR) sind.

6. System (100) nach Anspruch 1, wobei die Sensoren (20, 20') Riesenmagnetowiderstand-(GMR)-Sensoren sind.

**Revendications**

1. Système de mesure de déplacement de tige de soupape (100) comprenant une tige de soupape, et comprenant en outre-:

   • un boîtier (H) d'un ensemble de soupape adapté pour recevoir de manière coulissante la tige de soupape, dans lequel ladite tige de soupape glisse le long de la paroi dudit boîtier (H) ;
   • un aimant (03) monté sur ladite tige de soupape et adapté pour se déplacer entre deux positions prédéterminées définies le long d'un axe (C) de déplacement de ladite tige de soupape à l'intérieur dudit boîtier (H) en réponse au déplacement de ladite tige de soupape pour faciliter le changement du flux magnétique associé audit aimant (03) ; et au moins une paire de capteurs (20, 20') montée dans ledit boîtier (H), ledit système (100) **caractérisé en ce que**,
   • chacun desdits capteurs (20, 20') est disposé de part et d'autre dudit axe (C) et est configuré pour déterminer le déplacement dudit aimant (03) en fonction de la variation dudit flux magnétique causée par le mouvement dudit aimant (03), chacun desdits capteurs (20, 20') comprenant un concentrateur de flux (02, 02') configuré pour recevoir et diriger ledit flux magnétique dudit aimant (3) vers lesdits capteurs (20, 20').

2. Système (100) selon la revendication 1, dans lequel lesdits capteurs (20, 20') sont des capteurs à effet hall.

3. Système (100) selon la revendication 1, dans lequel lesdits capteurs (20, 20') sont configurés pour déterminer une distance de déplacement dudit aimant (03) jusqu'à 100 mm.

4. Système (100) selon la revendication 1, dans lequel lesdits capteurs (20, 20') sont disposés à une distance comprise entre 40 et 60 mm dudit axe (C) et à une inclinaison de 45 degrés par rapport audit axe (C).

5. Système (100) selon la revendication 1, dans lequel lesdits capteurs (20, 20') sont des capteurs de technologie magnétorésistance anisotropique (AMR).

6. Système (100) selon la revendication 1, dans lequel lesdits capteurs (20, 20') sont des capteurs de technologie magnétorésistance géante (GMR).

FIGURE 1

100

03

01

01'

H

FIGURE 2a

01

20

2

04

03

E1

I

H

02

01

20'

E2

04

FIGURE 2b

FIGURE 3

FIGURE 4

**EP 2 994 677 B1**

## REFERENCES CITED IN THE DESCRIPTION

**Patent documents cited in the description**

- US 4622644 A
- US 6073043 A
- US 5144977 A